# EUROPEAN PATENT APPLICATION

(11) **EP 2 194 535 A1**
(43) Date of publication of application: **09.06.2010**
(21) Application number: 08834513.7
(22) Date of filing: 24.09.2008
(51) Int. Cl.: G21C 17/00, G01H 17/00, G01N 29/44, G21C 17/003

(54) **OSCILLATION EVALUATION DEVICE AND EVALUATION METHOD**

(30) Priority: 25.09.2007 JP 2007247136
(71) Applicant: Kabushiki Kaisha Toshiba, Minato-ku, Tokyo 105-8001 (JP)
(72) Inventor: KITAJIMA, Yasumi, Tokyo 105-8001 (JP); HAGIWARA. Tsuyoshi, Tokyo 105-8001 (JP); WARASHINA, Masahiko, Tokyo 105-8001 (JP)
(74) Representative: HOFFMANN EITLE
(86) International application number: PCT/JP2008/067139
(87) International publication number: WO 2009/041404

(57) **Abstract**

The present invention includes: a plurality of sensors (strain gauge, accelerometer, ultrasonic sensor) that measure data on vibration at a plurality of measurement points on a jet pump; a vibration analysis unit that performs vibration analysis using a numerical structure analysis model of the jet pump, and calculates a vibration state of the jet pump; and an evaluation unit that estimates and evaluates a vibration state in each position on the jet pump using the numerical structure analysis model when an analysis result in a position corresponding to the measurement point by the vibration analysis of the vibration analysis unit matches the data measured by the sensors.

## Description

### Technical Field

The present invention relates to apparatus and method for evaluating vibration, and more particularly to apparatus and method for evaluating vibration of a structure inside a nuclear reactor (which will be simply referred as "reactor" hereinafter), such as a jet pump of a boiling water reactor (BWR).

### Background Art

In a jet pump that is one of recirculation devices used for adjusting a flow rate of reactor water in a boiling water reactor, a fluid flowing inside the jet pump causes fluid vibration. To reduce this vibration, a method of inserting a wedge between an inlet mixer pipe and a riser bracket has been used. However, it is known that if the wedge wears due to the fluid vibration during operation of the reactor, vibration of the jet pump, particularly, of the inlet mixer pipe increases. Under the present circumstances, a wear state of the wedge is detected by a visual check during a routine examination, and the wedge is replaced if required, but this work may extend a routine examination period. Further, even if the wedge enters a wear state that requires replacement during operation of the reactor, there is no technique for determining the fact.

Meanwhile, when the jet pump is overhauled during a routine examination or the like and then reassembled, the inlet mixer pipe and a jet pump diffuser may be eccentric or may be brought into contact with each other in a worse case, and this also changes a vibration state of the jet pump. It is necessary to develop a technique of evaluating such a change of the vibration state and finding the cause.

For techniques so as to detect wastage and wear, below-described techniques are known. One is a technique of measuring a thickness of piping with a thickness meter, and then transmitting measured thickness data from a data transmitting and receiving unit of the thickness meter to a computer having a database. This technique disclosed in Japanese Published Patent Application (Patent Laid-Open) No. 2001-280600 (JP-A-2001-280600) (Patent Document 1).

The other is a technique of projecting a light beam from an optical sensor to a surface of a control rod of a reactor control rod assembly, and measuring a wear volume of a surface of the control rod. This technique is disclosed in Japanese Published Patent Application (Patent Laid-Open) No. 10-20066 (JP-A-10-20066) (Patent Document 2).

Japanese Published Patent Application (Patent Laid-Open) No. 4-254734 (JP-A-4-254734) (Patent Document 3) and Japanese Published Patent Application (Patent Laid-Open) No. 9-145530 (JP-A-145530) (Patent Document 4) disclose a technique of mounting an accelerometer to piping, and calculating stress generated in the piping from an acceleration signal measured by the accelerometer, using a predetermined analysis model (vibration model).

In the technique described in Patent Document 1 (thickness control system), the meter includes the data transmitting and receiving unit, and thus it is difficult to apply the technique to a core internal (in-core structure) exposed to high temperature, high pressure, and high radiation.

The rod wear measuring method of the reactor control rod assembly described in Patent Document 2 is an application example to a device inside a reactor, but measurement can be actually performed only during operation stop of the reactor such as during a routine examination, and a wear volume cannot be monitored during the operation of the reactor.

Further, a piping system stress evaluation apparatus and a piping system fatigue evaluation apparatus described in Patent Documents 3 and 4 evaluate piping as an object to be evaluated, and calculates stress of the piping by analysis using an analysis model, and do not calculate a vibration state of the piping by analysis for evaluation. Beyond that it is difficult for this technique to evaluate a vibration state of a core internal provided in a region exposed to high temperature, high pressure, and high radiation during operation of the reactor. In addition, it is difficult for this technique to recognize the cause of the vibration state such as a wedge wear volume of the jet pump, an amount of eccentricity of the inlet mixer pipe with respect to the jet pump diffuser in the jet pump or the occurrence of a collision therebetween.

### Disclosure of the Invention

An object of the present invention is to provide vibration evaluation apparatus and vibration evaluation method that are achieved in view of the above-described circumstances, and can satisfactorily evaluate a vibration state of a core internal.

Another object of the present invention is to provide vibration evaluation apparatus and vibration evaluation method that can satisfactorily evaluate a failure state such as degradation of an object to be evaluated.

A vibration evaluation apparatus according to the present invention comprising:
a plurality of sensors that measure data on vibration at a plurality of measurement points on a core internal;
a vibration analysis unit that performs vibration analysis using a numerical structure analysis model of the core internal, and calculates a vibration state of the core internal; and
an evaluation unit that estimates and evaluates a vibration state in each position on the core internal using the numerical structure analysis model, when an analysis result in positions corresponding to the measurement points by vibration analysis of the analysis unit matches the data measured by the sensors.

Further, a vibration evaluation method according to the present invention comprising:
a measurement step of measuring data on vibration at a plurality of measurement points on a core internal using a plurality of sensors;
a vibration analysis step of performing vibration analysis using an numerical structure analysis model of the core internal, and calculating a vibration state of the core internal; and
an evaluating step of estimating and evaluating a vibration state in each position on the core internal using the numerical structure analysis model, when an analysis result in positions corresponding to the measurement points by vibration analysis in the vibration analysis step matches the data measured by the sensors.

Furthermore, a vibration evaluation apparatus according to the present invention comprising:
A vibration evaluation apparatus comprising:
   a sensor that measures data on vibration at a measurement point on an object to be evaluated,
   a vibration analysis unit that performs vibration analysis by changing a failure state of the object to be evaluated using an numerical structure analysis model of the object to be evaluated, and calculates a vibration state for each failure state of the object to be evaluated; and
   an evaluation unit that includes associated data of the failure state and the vibration state of the object to be evaluated associated with each other, and estimates and evaluates the failure state of the object to be evaluated using the associated data when it is determined from the measured data measured by the sensor that the vibration state of the object to be evaluated changes.

Still further, a vibration evaluation method according to the present invention comprising:
a measurement step of measuring data on vibration at a measurement point on an object to be evaluated using a sensor;
a vibration analysis step of performing vibration analysis by changing a failure state such as degradation of the object to be evaluated using an numerical structure analysis model of the object to be evaluated, and calculating a vibration state for each failure state of the object to be evaluated; and
an evaluation step of estimating and evaluating the failure state of the object to be evaluated using the associated data of the failure state and the vibration state of the object to be evaluated associated with each other when it is determined from the measured data measured in the measurement step that the vibration state of the object to be evaluated changes.

With the vibration evaluation apparatus and the vibration evaluation method according to the present invention, the vibration state of the core internal can be satisfactorily evaluated using the numerical structure analysis model of the core internal.

With the vibration evaluation apparatus and the vibration evaluation method according to the present invention, the failure state such as degradation of the object to be evaluated can be satisfactorily evaluated from the change in the vibration state of the object to be evaluated using the associated data between the failure state such as degradation and the vibration state of the object to be evaluated, calculated using the numerical structure analysis model of the object to be evaluated.

### Brief Description of the Drawings

Fig. 1 is a vertical sectional view illustrating a boiling water reactor (BWR) to which a vibration evaluation apparatus according to a first embodiment of the present invention is applied;
Fig. 2 is a front view illustrating the jet pump illustrated in Fig. 1;
Fig. 3 is a sectional view along the line III-III illustrated in Fig. 2;
Fig. 4 is an enlarged vertical sectional view of a portion IV illustrated in Fig. 2;
Fig. 5 is a configuration diagram illustrating a configuration of the vibration evaluation apparatus together with a jet pump illustrated in Figs. 1 and 2;
Fig. 6 is an explanatory view illustrating an example of a numerical structure analysis model of a jet pump;
Fig. 7A is a graph showing a frequency spectrum of measurement data obtained by the sensor illustrated in Fig. 5;
Fig. 7B is a graph showing a frequency spectrum of analysis result by using the numerical structure analysis model illustrated in Fig. 6;
Fig. 8 is a flowchart showing the steps performing by the vibration evaluation apparatus illustrated by Fig. 5;
Fig. 9A is a configuration diagram illustrating a vibration evaluation apparatus according to a second embodiment of the present invention together with a jet pump;
Fig. 9B is a side view illustrating a reflector mounted to the jet pump together with an ultrasonic sensor;
Fig. 10 is an explanatory view illustrating an example of a numerical structure analysis model of a jet pump
Fig. 11A is a graph showing a frequency spectrum of measurement data obtained by the sensor illustrated in Fig. 9;
Fig. 11B is a graph showing a frequency spectrum of analysis result by using the numerical structure analysis model illustrated in Fig. 10;
Fig. 12 is a configuration diagram illustrating a vibration evaluation apparatus according to a third embodiment together with a jet pump;
Fig. 13 is an explanatory view illustrating an example, of an associated data associated between the failure state such as degradation and the vibration state of the jet pump, calculated by the vibration analysis unit illustrated in Fig. 12;
Fig. 14 is a frequency spectrum of measurement data obtained by an ultrasonic sensor, Fig. 14A is a graph of the frequency spectrum before changing a position of a peak value of the frequency (on normal state), and Fig. 14B is a graph of the frequency spectrum after changing a peak value of the frequency (on abnormal state); and
Fig. 15 is a flowchart showing the steps performing by the vibration evaluation apparatus illustrated by Fig. 12.

### Best Mode for Carrying Out the Invention

Now, the best mode for carrying out the present invention will be described with reference to the drawings. The present invention is, however, not limited to the embodiments.

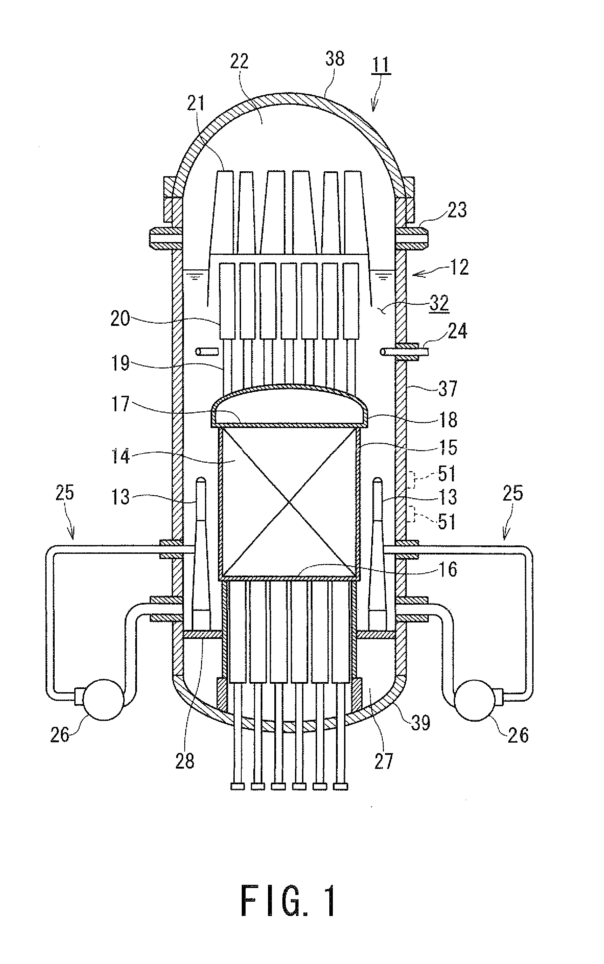

### [First embodiment (Figs. 1-8)]

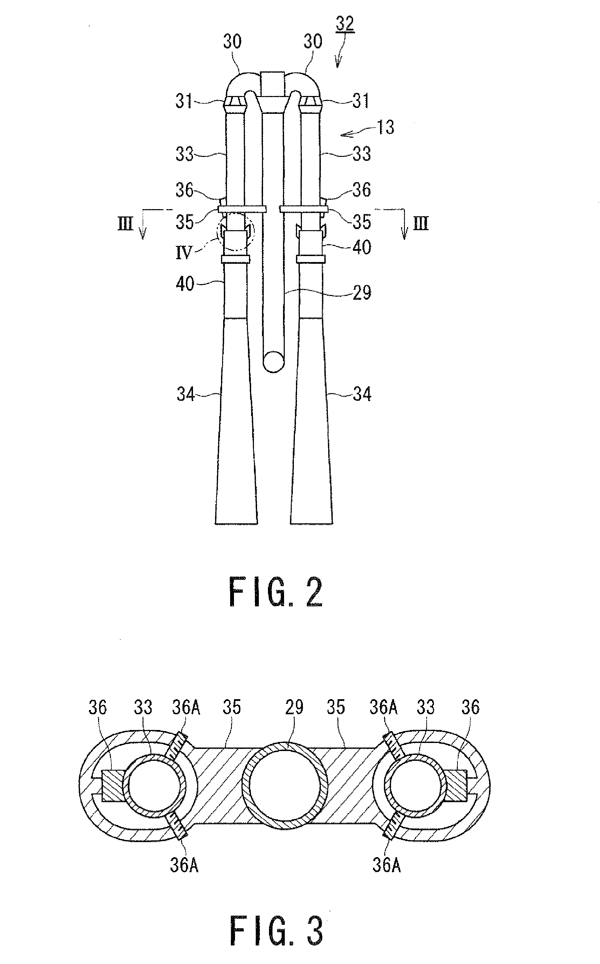

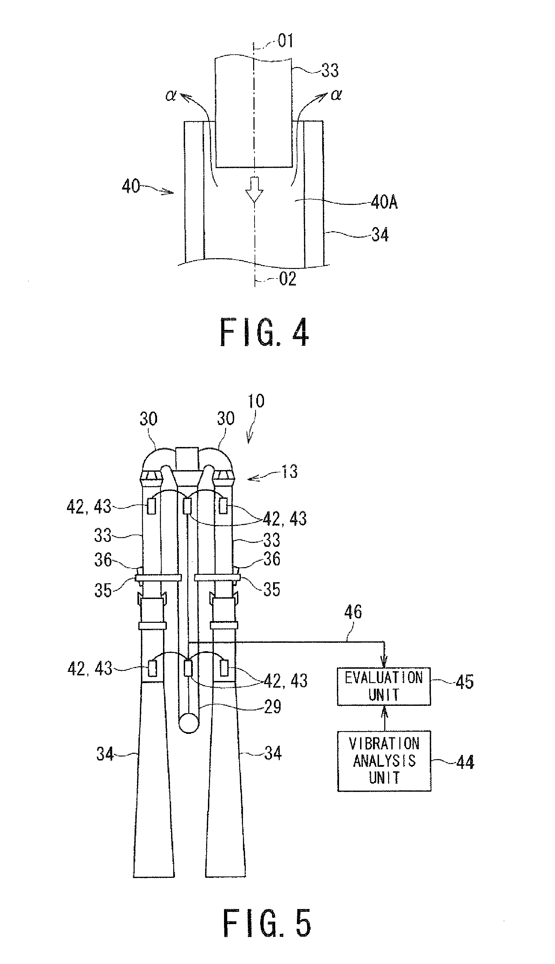

Fig. 1 is a vertical sectional view illustrating a boiling water reactor to which a vibration evaluation apparatus according to a first embodiment of the present invention is applied. Fig. 2 is a front view illustrating a jet pump illustrated in Fig. 1. Fig. 5 is a configuration diagram illustrating a configuration of the vibration evaluation apparatus together with a jet pump illustrated in Figs. 1 and 2.

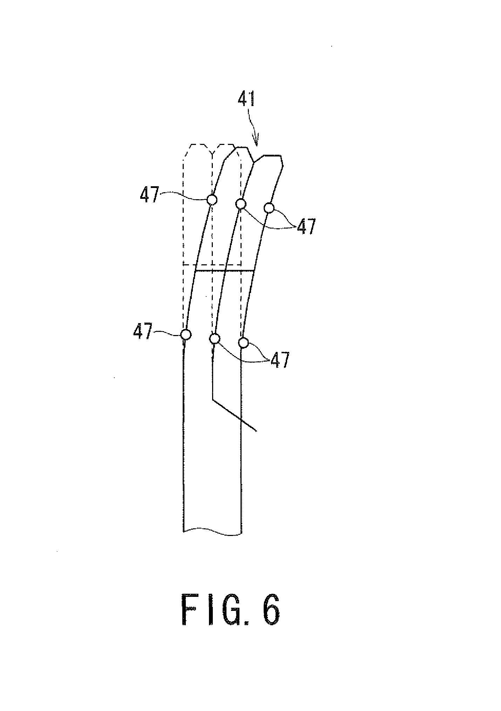

The vibration evaluation apparatus 10 illustrated in Fig. 5 is applied to, for example, a boiling water reactor (hereinafter, referred to as "BWR") 11 illustrated in Fig. 1, and evaluates a vibration state of a jet pump 13 or a steam drier 21 that is a core internal as an object (in this embodiment, which is the jet pump 13) to be evaluated provided in a nuclear pressure nuclear pressure vessel 12, using a numerical structure analysis model 41 (Fig. 6).

As shown in Fig. 1, the BWR 11 houses a reactor core 14 in the nuclear pressure nuclear pressure vessel 12, and multiple fuel assemblies (not shown) that constitute the reactor core 14 are surrounded by a shroud 15, and supported by a reactor core support plate 16 and an upper grid plate 17. An upper portion of the shroud 15 is closed by a shroud head 18, and a steam-water separator 20 is mounted on the shroud head 18 via a stand pipe 19. In the nuclear pressure nuclear pressure vessel 12, the steam dryer 21 is provided above the steam-water separator 20.

From steam generated in the reactor core 14, water is separated by the steam-water separator 20, the steam is dried by the steam drier 21 and fed to an upper dome 22, and fed from a main steam nozzle 23 via a main steam system to a turbine system (both not shown). The steam having worked in the turbine system is condensed and supplied through a water supply pipe 24 into the nuclear pressure nuclear pressure vessel 12 as a coolant 32. The coolant (reactor water) 32 is increased in pressure by a recirculation pump 26 in a reactor recirculation system 25, and guided to a lower plenum 27 below the reactor core 14 by a plurality of jet pumps 13 placed in an annular portion between the nuclear pressure nuclear pressure vessel 12 and the shroud 15.

The plurality of jet pumps 13 are placed on a pump deck 28 arranged in the annular portion between the nuclear pressure nuclear pressure vessel 12 and the shroud 15 at equally spaced intervals circumferentially of the reactor core 14. As illustrated in Fig. 2, each of the jet pumps 13 guides the coolant 32 increased in pressure by the recirculation pump 26 to a riser pipe 29, and further guides the coolant 32 via an elbow pipe 30 to a nozzle unit 31. The nozzle unit 31 takes in an ambient coolant 32, mixes the coolants 32 in an inlet mixer pipe 33, and discharges the coolants 32 from a jet pump diffuser 34 to below the reactor core 14.

As illustrated in Fig. 4, a lowest end of the inlet mixer pipe 33 is fitted to the jet pump diffuser 34 with a gap 40A, and the fitting portion is referred to as a slip joint 40. The inlet mixer pipe 33, as also illustrated in Fig. 3, is supported using a riser bracket 35 mounted on the riser pipe 29 via a wedge 36 and a set screw 36A. Thus, central axes O1 and O2 of the inlet mixer pipe 33 and the jet pump diffuser 34 are aligned. Thus, the pipe inlet mixer 33 is adjusted so as not to collide with the jet pump diffuser 34 by vibration due to a flow α of the coolant 32 flowing through the gap 40A of the slip joint 40.

However, vibration of the fluid flowing through the gap 40A of the slip joint 40 may cause sliding wear between the riser bracket 35 and the wedge 36 or between the riser bracket 35 and the set screw 36A, which may create a gap therebetween. If the gap is once created, variations in the flow α of the coolant 32 flowing through the gap 40A of the slip joint 40 increase to further increase the sliding wear between the riser bracket 35 and the wedge 36 or between the riser bracket 35 and the set screw 36A, and finally, the inlet mixer pipe 33 may collide with the jet pump diffuser 34. The variations in the gap 40A of the slip joint 40 also affect performance of the jet pump 13. Thus, it is necessary to replace the wedge 36 or the set screw 36A, particularly the wedge 36, degraded with developed wear, align the central axis O1 of the inlet mixer pipe 33 with the central axis 02 of the jet pump diffuser 34, and always properly hold the gap 40A of the slip joint 40.

As illustrated in Fig. 1, the nuclear pressure vessel 12 is configured so that an upper opening and a lower opening of a pressure vessel body 37 are closed by a vessel lid 38 and a lower mirror unit 39, respectively. The pressure vessel body 37 forms the annular portion in which the jet pump 13 is placed, between the pressure vessel body 37 and the shroud 15.

In a nuclear power plant including the BWR 11 configured as described above, the action of the flow of the coolant 32 in the nuclear pressure vessel 12 of the BWR 11 causes minute vibration of the jet pump 13 even in a normal operation state. The wedge 36 or the like has a function of preventing such vibration, but wear of the wedge 36 or the like due to the vibration reduces the vibration preventing function, which increases vibration of the jet pump 13 (particularly, inlet mixer pipe 33).

The vibration evaluation apparatus 10 of this embodiment evaluates the vibration state of the jet pump 13 as described above. As illustrated in Fig. 5, the vibration evaluation apparatus 10 of this embodiment evaluates includes a strain gauge 42 or an accelerometer 43 as a sensor, a vibration analysis unit 44 that performs vibration analysis using the numerical structure analysis model 41, and an evaluation unit 45 that estimates and evaluates the vibration state of the jet pump 13.

Strain gauges 42 or accelerometers 43 are attached to a plurality of measurement points on the jet pump 13, and measure data on vibration at the measurement points. The data on vibration is a measured strain value for the strain gauge 42, and a measured acceleration value for the accelerometer 43. A cable 46 of the strain gauge 42 or the accelerometer 43 is laid outside the nuclear pressure vessel 12 (Fig. 1) via a pressure boundary and connected to the evaluation unit 45.

The vibration analysis unit 44 performs the vibration analysis using the numerical structure analysis model 41 of the jet pump 13 illustrated in Fig. 6, and calculates a vibration parameter that is a vibration state in normal time (standard value) of the jet pump 13. The vibration parameter is a value indicating a vibration state such as strain, acceleration, stress, and vibration displacement. The measurement point to which the strain gauge 42 or the accelerometer 43 is attached is determined as a proper position for recognizing the vibration state of the jet pump 13 based on an analysis result of vibration analysis in the normal time of the jet pump 13 performed by the vibration analysis unit 44. In the numerical structure analysis model 41 illustrated in fig. 6, the broken line shows a resting state, and the solid line shows a vibration state.

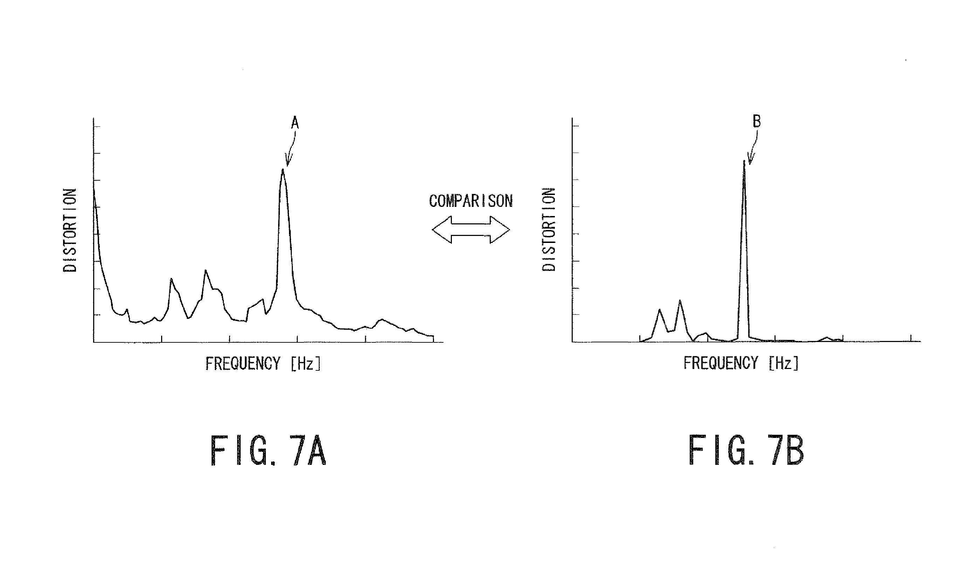

The evaluation unit 45 first performs frequency analysis of measured data at each measurement point by the strain gauge 42 or the accelerometer 43 (a measured strain value for the strain gauge 42 or a measured acceleration value for the accelerometer 43), and calculates a frequency spectrum A (see Fig. 7A: in Fig. 7A, the measured data is a strain value). Then, the evaluation unit 45 performs frequency analysis of a vibration parameter (a strain value for the strain gauge 42 or an acceleration value for the accelerometer 43) in a position 47 corresponding to each measurement point, of the strain gauge 42 or the accelerometer 43, obtained as an analysis result of numerical structure analysis the numerical structure analysis model 41, and calculates a frequency spectrum B (see Fig. 7B: in Fig. 7B, the vibration parameter is a strain value). Then, the evaluation unit 45 determines whether characteristic spots, for example, peak positions of the frequency spectrums A and B match each other. When the characteristic spots match each other, it is evaluated that the numerical structure analysis model 41 used in the vibration analysis unit 44 accurately reflects the vibration state of the actual jet pump 13.

The evaluation unit 45 estimates and evaluates a vibration parameter (such as strain, acceleration, stress, vibration displacement, or the like) in the position 47 corresponding to the measurement point and each position on the jet pump 13 other than the position 47, corresponding to a measurement point, using the numerical structure analysis model 41 accurately reflecting the actual jet pump 13. Further, the evaluation unit 45 outputs a warning when the estimated value of the vibration parameter exceeds a structural soundness criterion as an acceptable (limit) value.

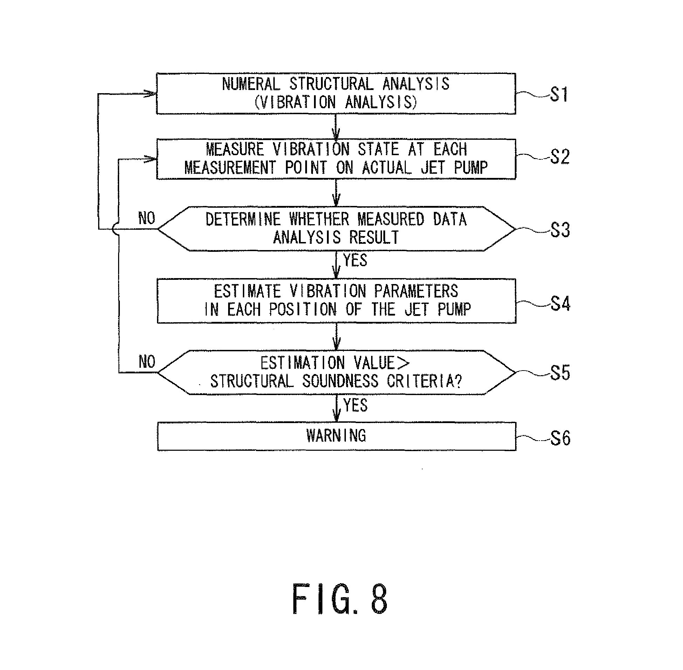

An operation of the vibration evaluation apparatus 10 configured as described above will be described below with reference to Figs. 5 and 8.

First, the vibration analysis unit 44 performs vibration analysis using the numerical structure analysis model 41 of the jet pump 13, and calculates the vibration state of the jet pump 13 in the normal time (standard value) (S1).

Then, a measurement point of the strain gauge 42 or the accelerometer 43 on the actual jet pump 13 is determined based on the analysis result of the vibration analysis unit 44, and the strain gauge 42 or the accelerometer 43 measures a vibration state (herein, the vibration state is a strain value when the strain gauge measures the vibration state or an acceleration value when the accelerometer 43 measures the vibration state) at each measurement point (S2).

Then, the evaluation unit 45 determines whether the characteristic spots of the frequency spectrum A of measured data of the strain gauge 42 or the accelerometer 43 and the frequency spectrum B of the vibration parameter (a strain value obtained by the strain gauge 42 or an acceleration value obtained by the accelerometer 43) in the position 47 corresponding to a measurement point, on the numerical structure analysis model 41 match each other (S3). When the characteristic spots match each other, the evaluation unit 45 estimates a vibration parameter (such as strain, acceleration, stress, vibration displacement, or the like) in each position of the jet pump 13 using the numerical structure analysis model 41 (S4).

When the characteristic spots of the frequency parameters A and B do not match each other in Step S3, the vibration analysis unit 44 corrects the numerical structure analysis model 41, performs vibration analysis and newly calculates a vibration parameter (a strain value obtained by the strain gauge 42 or an acceleration value obtained by the accelerometer 43), and the evaluation unit 45 performs Steps S3 and S4 using the newly calculated vibration parameter and the corrected numerical structure analysis model 41.

The evaluation unit 45 determines whether the estimated value of the vibration parameter (such as strain, acceleration, stress, vibration displacement, or the like) estimated using the numerical structure analysis model 41 exceeds the structural soundness criterion (S5). When the estimated value exceeds the structural soundness criterion, the evaluation unit 45 outputs a warning (S6).

According to this (the first) embodiment, the apparatus and method according to this embodiment of the present invention provide following effects (advantages) (1) and (2).

(1) The vibration parameter (such as strain, acceleration, stress, vibration displacement, or the like) at the measurement point of the jet pump 13 and in each position other than the measurement point is estimated using the numerical structure analysis model 41 accurately reflecting the actual jet pump 13, and the vibration state of the jet pump 13 is evaluated. Thus, the vibration state can be satisfactorily evaluated even during operation of the BWR 11. Thus, a wear volume of the wedge 36 of the jet pump 13, an amount of eccentricity of the inlet mixer pipe 33 with respect to the jet pump diffuser 34 in the jet pump 13 or the occurrence of a collision therebetween can be recognized.

(2) The warning is output when the estimated value of the vibration parameter (such as strain, acceleration, stress, vibration displacement, or the like) in each position including the position 47 corresponding to a measurement point, of the jet pump 13 estimated using the numerical structure analysis model 41 exceeds the structural soundness criterion, and thus proper maintenance of the jet pump 13 can be performed according to the level of the estimated value, such as repair or replacement of the jet pump 13 in the next routine examination of the BWR 11, or replacement of the jet pump 13 by immediately stopping the operation of the BWR 11.

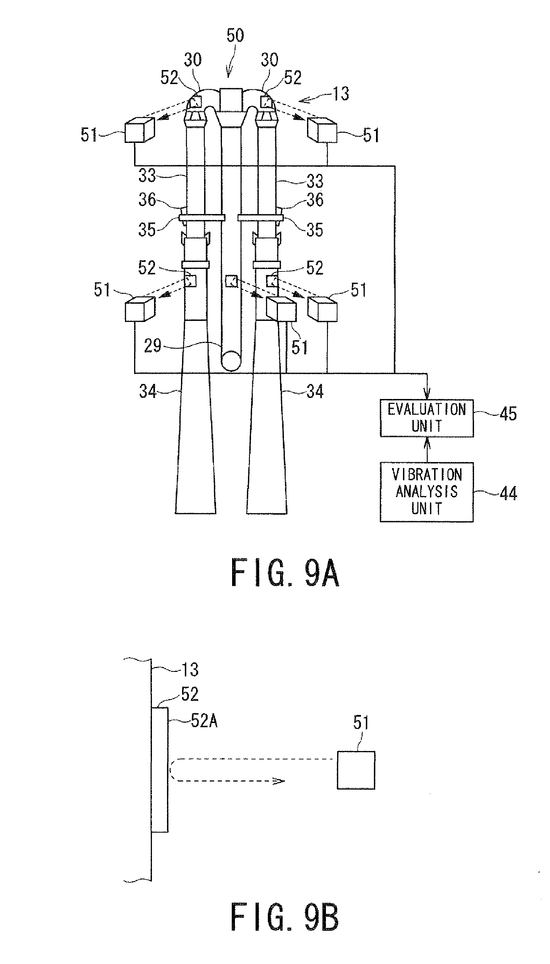

### [Second embodiment (Figs. 9-11)]

Fig. 9A is a configuration diagram illustrating a vibration evaluation apparatus 50 according to a second embodiment of the present invention together with a jet pump, and Fig. 9B is a side view illustrating a reflector mounted to the jet pump together with an ultrasonic sensor. In the second embodiment, the same components as in the vibration evaluation apparatus 10 according to a first embodiment of the present invention are denoted by the same reference numerals and descriptions thereof will be simplified or omitted.

The vibration evaluation apparatus 50 according to the second embodiment of the present invention is different from the vibration evaluation apparatus 10 according to the first embodiment of the present invention in that the sensor is an ultrasonic sensor 51.

A plurality of ultrasonic sensors 51 are attached to an outer wall surface of a nuclear pressure vessel 12 (Fig. 1) correspondingly to measurement points on the jet pump 13. On each measurement point on the jet pump 13, a reflector 52 including a planar reflecting surface 52A that reflects ultrasonic wave from the ultrasonic sensor 51 is attached. The reflecting surface 52A may be formed by machining the measurement point itself on the jet pump 13 into a planar shape. From a propagation time of ultrasonic wave transmitted by the ultrasonic sensor 51, reflected by the reflecting surface 52A of the reflector 52, and received by the ultrasonic sensor 51, vibration displacement at each measurement point on the jet pump 13 is measured as data on vibration using a propagation speed of the ultrasonic wave.

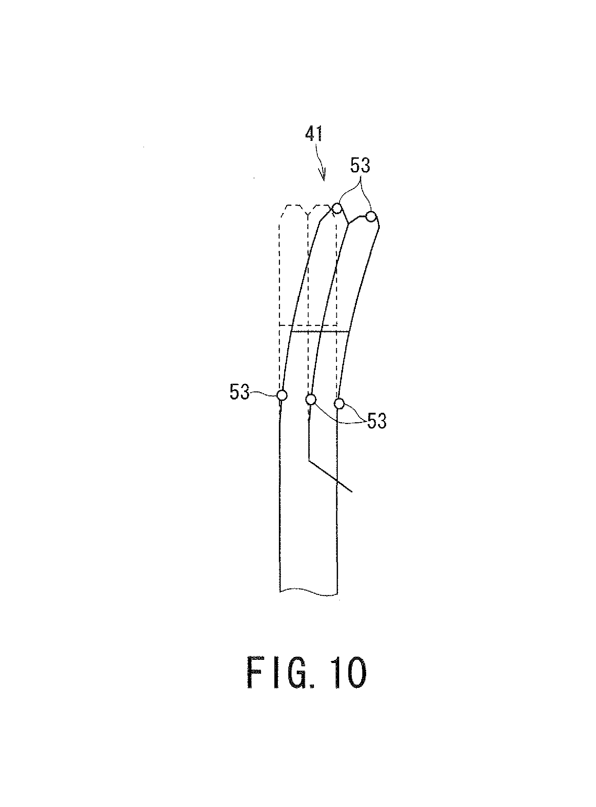

The vibration analysis unit 44 performs vibration analysis using a numerical structure analysis model 41 (Fig. 10) of the jet pump 13, and calculates a vibration parameter (vibration displacement) that is a vibration state in normal time (standard value) of the jet pump 13 as in the above-described embodiment. Based on the vibration analysis result obtained by the vibration analysis unit 44, each measurement point on the jet pump 13 by the ultrasonic sensor 51 is determined. Reference numeral 53 shown in Fig. 10 denotes a position corresponding to a measurement point on the numerical structure analysis model 41 corresponding to each measurement point on the jet pump 13. Further, in the numerical structure analysis model 41 shown in Fig. 10, the broken line shows a resting state, and the solid line shows a vibration state.

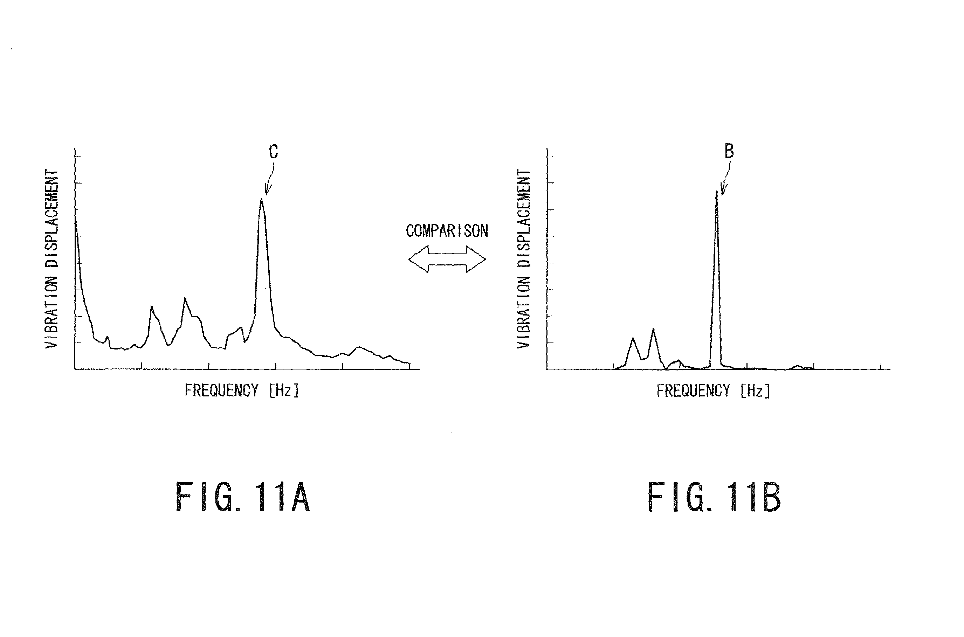

The evaluation unit 45 performs frequency analysis of vibration displacement data measured at each measurement point by the ultrasonic sensor 51 and calculates a frequency spectrum C (refer to Fig. 11A), and performs frequency analysis of a vibration parameter (that is, vibration) in the position 53 corresponding to a measurement point, obtained as the analysis result of the numerical structure analysis model 41, and calculates a frequency spectrum D (refer to Fig. 11B). The evaluation unit 45 determines whether characteristic spots of the frequency spectrums C and D match each other. When the characteristic spots match each other, the evaluation unit 45 estimates and evaluates a vibration parameter (such as vibration displacement, acceleration, strain, stress, or the like) in the position 53 corresponding to the measurement point and a position other than the position 53 corresponding to the measurement point. Further, the evaluation unit 45 outputs a warning when the estimated vibration parameter exceeds a structural soundness criterion.

According to this (the second) embodiment, the apparatus and method according to this embodiment of the present invention provide an advantage that no cable 46 (Fig. 5) needs to be laid in the nuclear pressure vessel 12 because the sensor is the ultrasonic sensor 51 attached to an outside the nuclear pressure vessel 12, and also provides the same advantage as the first embodiment according to the present invention.

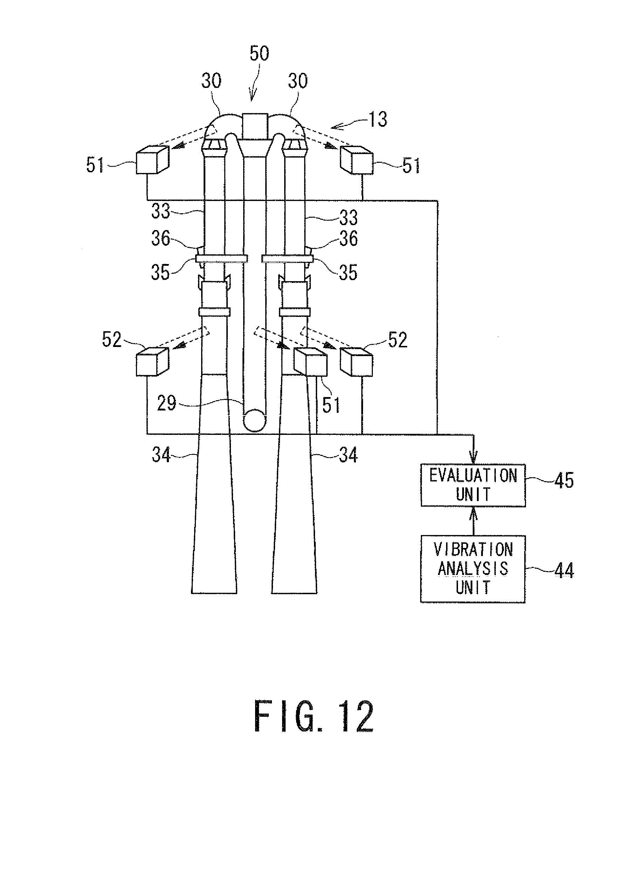

### [Third embodiment (Figs. 12-15)]

Fig. 12 is a configuration diagram illustrating a vibration evaluation apparatus according to a third embodiment together with a jet pump. In third embodiment, the same components as in the vibration evaluation apparatuses 10 and 50 according to the first and second embodiments of the present invention are denoted by the same reference numerals and descriptions thereof will be simplified or omitted.

A vibration evaluation apparatus 60 of this embodiment is different from the vibration evaluation apparatuses 10 and 50, and when there is a change in measured data on vibration of an object to be evaluated, the vibration evaluation apparatus 60 estimates and evaluate a failure state such as degradation that has occurred on the object to be evaluated based on the change in the measured data. The vibration evaluation vibration evaluation apparatus 60 includes a sensor such as an ultrasonic sensor 51, a vibration analysis unit 61, and an evaluation unit 62.

The object to be evaluated is a core internal such as a jet pump 13 or a steam drier 21, a device or piping in a vessel or a tank, and in this embodiment, the jet pump 13 is taken as an example. The failure state such as degradation is, for example, a wear state due to degradation of the wedge 36 of the jet pump 13, or an eccentricity or collision state between the inlet mixer pipe 33 and the jet pump diffuser 34 in the jet pump 13.

As in the second embodiment, the ultrasonic sensor 51 measures vibration displacement as data on vibration, at each measurement point on the jet pump 13. The sensor may be the ultrasonic sensor 51, or may be a strain gauge 42 that measures a strain value as data on vibration or an accelerometer 43 that measures an acceleration value as data on vibration.

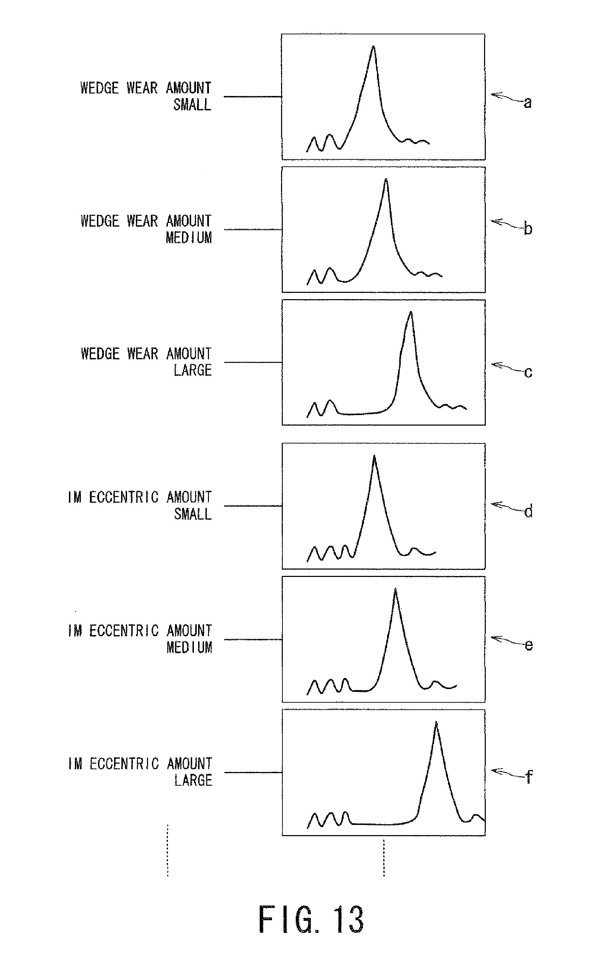

A vibration analysis unit 61 changes a failure state such as degradation of the jet pump 13 using a numerical structure analysis model 41 (Fig. 10) of the jet pump 13, performs vibration analysis for each failure state such as degradation, and calculates a vibration state for each failure state such as degradation of the jet pump 13. For example, as illustrated in Fig. 13, the vibration analysis unit 61 performs vibration analysis using the numerical structure analysis model 41 for each of small, middle and large wear volumes of the wedge 36, or each of small, middle and large amounts of eccentricity of the inlet mixer pipe 33 (IM), calculates vibration displacement for each of the levels (small, middle and large) of a wear volume of the wedge 36 or an amount of eccentricity of the inlet mixer pipe 33, and performs frequency analysis of the vibration displacement and calculates frequency spectrums a, b, c, d, e, f ... indicating the vibration state.

As illustrated in Fig. 13, the evaluation unit 62 associates the failure state such as degradation and the vibration state of the jet pump 13 calculated by the vibration analysis unit 61 as described above with each other. Then, the evaluation unit 62 stores the states associated between the failure state and the vibration state of the jet pump 13 as associated data.

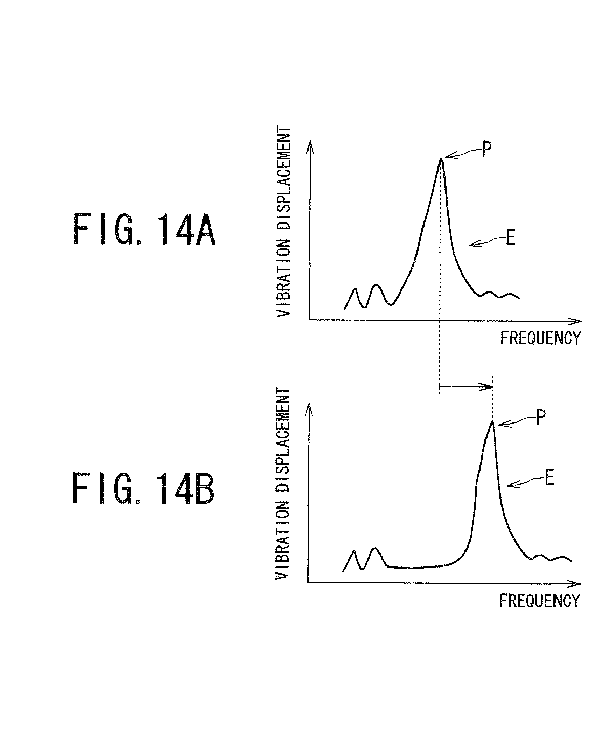

The evaluation unit 62 performs frequency analysis of measured data (vibration displacement) at the measurement point on the jet pump 13 measured by the ultrasonic sensor 51 and calculates a frequency spectrum F (refer to Fig. 14B). When, for example, a peak position P of the frequency spectrum F changes with respect to that of the frequency spectrum E (refer to Fig. 14A) of measured data (vibration displacement) at the measurement point on the jet pump 13 in a normal state, the evaluation unit 62 determines that the vibration state of the jet pump 13 changes.

At this time, the evaluation unit 62 compares the frequency spectrums a, b, c, d, e, f ... of the associated data shown in Fig. 13 with the frequency spectrum F of the vibration displacement measured by the ultrasonic sensor 51, selects the frequency spectrum a, b, c, d, e, f ... having a characteristic point matching that of the frequency spectrum F, and estimates and evaluate a failure state such as degradation associated with the selected frequency spectrum as a failure state such as degradation of the jet pump 13 at the present time.

The estimation of the failure state such as degradation includes estimation of a wear volume of the wedge 36 of the jet pump 13 in normal operation of the BWR 11, and also estimation of an amount of eccentricity of the inlet mixer pipe 33 with respect to the jet pump diffuser 34 in the jet pump 13 or the occurrence of a collision therebetween, performed by comparing frequency spectrums of measured data measured before overhauling and after reassembling when the jet pump 13 is overhauled and then reassembled during a routine examination, or estimation of an amount of eccentricity of the inlet mixer pipe 33 with respect to the jet pump diffuser 34 in the jet pump 13 or the occurrence of a collision therebetween, performed by comparing frequency spectrums of measured data measured before and after the occurrence of an earthquake.

The evaluation unit 62 further outputs a warning when the estimated failure state such as degradation (the wear volume of the wedge 36, the amount of eccentricity of the inlet mixer pipe 33 with respect to the jet pump diffuser 34 or the occurrence of a collision therebetween, or the like) exceeds a criterion as an acceptable value.

The evaluation unit 62 may store the associated data between the failure state such as degradation and the vibration state of the jet pump 13, determine the change in the frequency spectrum F of the measured data, estimate the failure state such as degradation corresponding to the frequency spectrum F, and determine the output of a warning, using a neural network. The neural network is an information processing system modeling a human cranial nerve system, and realizes processing such as recognition, memory, or determination as basic functions of the human brain on a computer.

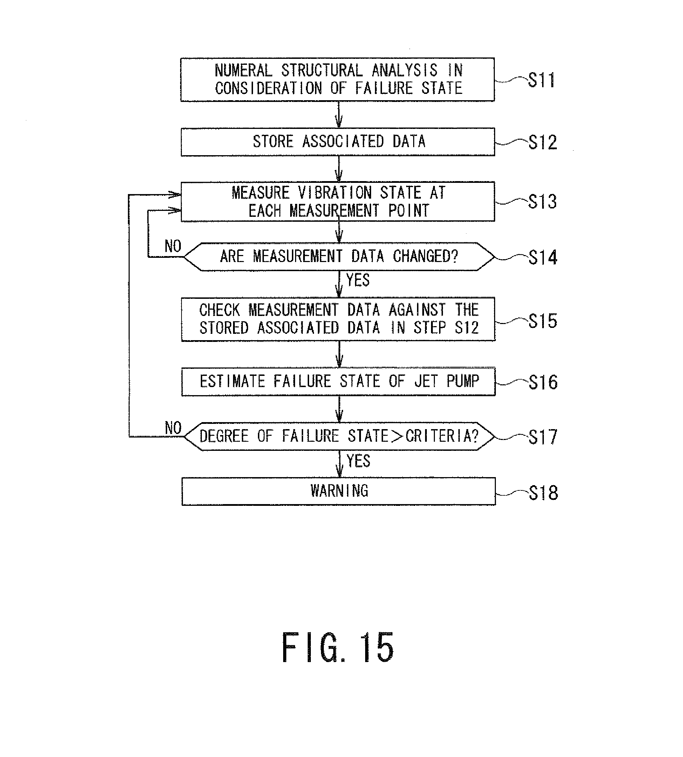

Next, an operation of the vibration evaluation apparatus 60 configured as described above will be described with reference to Fig. 15.

The vibration analysis unit 61 changes the failure state such as degradation of the jet pump 13 using the numerical structure analysis model 41 of the jet pump 13, performs vibration analysis for each failure state such as degradation, and calculates a vibration state (frequency spectrum of vibration displacement) for each failure state such as degradation of the jet pump 13 (S11).

The evaluation unit 62 stores associated data, for example, shown in Fig. 13, of the failure state such as degradation and the vibration state of the jet pump 13 associated with each other (S12).

The ultrasonic sensor 51 measures and transmits vibration displacement of the jet pump 13 to the evaluation unit 62 during operation of the BWR 11 (S13).

The evaluation unit 62 determines whether the frequency spectrum F of the vibration displacement of the jet pump 13 measured by the ultrasonic sensor 51 changes with respect to the frequency spectrum E of the vibration displacement of the normal jet pump 13 (S 14).

When the evaluation unit 62 determines that the frequency spectrum F changes with respect to the frequency spectrum E, the evaluation unit 62 checks the frequency spectrum F against the associated data stored in Step S 12 (S15), selects and calculates the frequency spectrum a, b, c, d, e, f ... having a characteristic point matching that of the frequency spectrum F, and estimates the failure state such as degradation associated with the selected frequency spectrum as a failure state such as degradation of the jet pump 13 at the present time (S16).

[0060] The evaluation unit 62 outputs a warning when the failure state such as degradation estimated in Step S16 exceeds a criterion (S17).

When the evaluation unit 62 determines in Step S 14 that the frequency spectrum F of the vibration displacement measured by the ultrasonic sensor 51 does not change, or determines in Step S 17 that the failure state such as degradation does not exceed the criterion, the evaluation unit 62 returns to Step S13.

According to this (the third) embodiment, the apparatus and method according to this embodiment of the present invention as described above provide following advantages (3) and (4).

(3) The vibration analysis unit 61 calculates the frequency spectrum of vibration displacement of the jet pump 13 for each failure state such as degradation of the jet pump 13 using the numerical structure analysis model 41 of the jet pump 13, the evaluation unit 62 stores the associated data of the failure state such as degradation of the jet pump 13 and the frequency spectrum of the vibration displacement associated with each other, and further checks the frequency spectrum of the vibration displacement of the jet pump 13 measured by the ultrasonic sensor 51 against the associated data, and estimates the failure state (which is the wear volume of the wedge 36, the amount of eccentricity of the inlet mixer pipe 33 with respect to the jet pump diffuser 34 in the jet pump 13, the occurrence of a collision therebetween or the like) such as degradation of the jet pump 13 at the present time. Thus, even during the operation of the BWR 11, the failure state such as degradation of the jet pump 13 can be satisfactorily recognized and evaluated.

(4) The evaluation unit 62 outputs a warning when the estimated failure state such as degradation of the jet pump 13 exceeds the criterion, and thus the failure state such as degradation of the jet pump 13 can be quickly and properly accommodated.

## Claims

1. A vibration evaluation apparatus comprising:
a plurality of sensors that measure data on vibration at a plurality of measurement points on a core internal;
a vibration analysis unit that performs vibration analysis using a numerical structure analysis model of the core internal, and calculates a vibration state of the core internal; and
an evaluation unit that estimates and evaluates a vibration state in each position on the core internal using the numerical structure analysis model, when an analysis result in positions corresponding to the measurement points by vibration analysis of the analysis unit matches the data measured by the sensors.

2. The vibration evaluation apparatus according to claim 1, wherein the evaluation unit outputs a warning when an estimated value of the vibration state of the core internal estimated using the numerical structure analysis model exceeds an acceptable value.

3. The vibration evaluation apparatus according to claim 1, wherein the core internal is a jet pump of a boiling water reactor.

4. The vibration evaluation apparatus according to claim 1, wherein the sensor is a strain gauge or an accelerometer attached to the measurement point on the core internal, the strain gauge measures a measured strain value and the accelerometer measures a measured acceleration value as data on vibration.

5. The vibration evaluation apparatus according to claim 1, wherein the sensor is an ultrasonic sensor attached to an outside a nuclear pressure vessel correspondingly to the measurement point on the core internal, and measures vibration displacement at the measurement point as data on vibration.

6. The vibration evaluation apparatus according to claim 5, wherein a planar reflecting surface that reflects ultrasonic wave is attached to the measurement point on the core internal.

7. A vibration evaluation apparatus comprising:
a sensor that measures data on vibration at a measurement point on an object to be evaluated,
a vibration analysis unit that performs vibration analysis by changing a failure state of the object to be evaluated using an numerical structure analysis model of the object to be evaluated, and calculates a vibration state for each failure state of the object to be evaluated; and
an evaluation unit that includes associated data of the failure state and the vibration state of the object to be evaluated associated with each other, and estimates and evaluates the failure state of the object to be evaluated using the associated data when it is determined from the measured data measured by the sensor that the vibration state of the object to be evaluated changes.

8. The vibration evaluation apparatus according to claim 7, wherein the evaluation unit outputs a warning when the estimated failure state of the object to be evaluated exceeds an acceptable value.

9. The vibration evaluation apparatus according to claim 7, wherein a function of the evaluation unit is performed using a neural network.

10. The vibration evaluation apparatus according to claim 7, wherein the failure state of the object to be evaluated is a wear state of a wedge in a jet pump of a boiling water reactor.

11. The vibration evaluation apparatus according to claim 7, wherein the failure state of the object to be evaluated is an eccentricity or contact state between an inlet mixer pipe and a jet pump diffuser in a jet pump of a boiling water reactor.

12. The vibration evaluation apparatus according to claim 7, wherein the sensor is a strain gauge or an accelerometer attached to the measurement point on the core internal, the strain gauge measures a measured strain value and the accelerometer measures a measured acceleration value as data on vibration.

13. The vibration evaluation apparatus according to claim 7, wherein the sensor is an ultrasonic sensor attached to an outside a nuclear pressure vessel correspondingly to the measurement point on the core internal, and measures vibration displacement at the measurement point as data on vibration.

14. The vibration evaluation apparatus according to claim 13, wherein a planar reflecting surface that reflects ultrasonic wave is attached to the measurement point on the core internal.

15. A vibration evaluation method comprising:
a measurement step of measuring data on vibration at a plurality of measurement points on a core internal using a plurality of sensors;
a vibration analysis step of performing vibration analysis using an numerical structure analysis model of the core internal, and calculating a vibration state of the core internal; and
an evaluation step of estimating and evaluating a vibration state in each position on the core internal using the numerical structure analysis model, when an analysis result in positions corresponding to the measurement points by vibration analysis in the vibration analyzing step matches the data measured by the sensors.

16. A vibration evaluation method comprising:
a measurement step of measuring data on vibration at a measurement point on an object to be evaluated using a sensor;
a vibration analyzing step of performing vibration analysis by changing a failure state such as degradation of the object to be evaluated using an numerical structure analysis model of the object to be evaluated, and calculating a vibration state for each failure state of the object to be evaluated; and
an evaluating step of estimating and evaluating the failure state of the object to be evaluated using the associated data of the failure state and the vibration state of the object to be evaluated associated with each other when it is determined from the measured data measured in the measurement step that the vibration state of the object to be evaluated changes.
